# EUROPEAN PATENT SPECIFICATION

(11) **EP 4 170 851 B1**
(45) Date of publication and mention of the grant of the patent: **02.12.2026**
(21) Application number: 22201626.3
(22) Date of filing: 14.10.2022
(51) Int. Cl.: H02J 3/38, H02J 3/48

(54) **SYSTEM AND METHODS FOR CONTROLLING A POWER GENERATING ASSET HAVING A NON DELIVERABLE COMPONENT OF A TOTAL POWER OUTPUT**
SYSTEM UND VERFAHREN ZUR STEUERUNG EINES STROMERZEUGUNGSVERMÖGENS MIT EINER NICHT LIEFERBAREN KOMPONENTE EINER GESAMTLEISTUNGSAUSGABE
SYSTÈME ET PROCÉDÉS DE COMMANDE D'UN ACTIF DE GÉNÉRATION D'ÉNERGIE AYANT UN COMPOSANT NON DISTRIBUABLE D'UNE SORTIE DE PUISSANCE TOTALE

(30) Priority: 19.10.2021 US 202117504584
(43) Date of publication of application: 26.04.2023
(73) Proprietor: General Electric Renovables España, S.L., 08005 Barcelona (ES)
(72) Inventor: Howard, Dustin, Schenectady, NY 12345 (US); Achilles, Alfredo Sebastian, Schenectady, NY 12345 (US)
(74) Representative: Zimmermann & Partner Patentanwälte mbB

(56) References cited:
- US-A1- 2009 206 606
- US-A1- 2016 285 252
- US-A1- 2021 010 456

## Description

### FIELD

The present disclosure relates in general to power generation, and more particularly to systems and methods for controlling a power generating asset having a non-deliverable component of a total power output.

### BACKGROUND

As disclosed herein, power generating assets may take a variety of forms and may include power generating assets which rely on renewable and/or nonrenewable sources of energy. Those power generating assets which rely on renewable sources of energy may generally be considered one of the cleanest, most environmentally friendly energy sources presently available. For example, wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate support frame located within the nacelle. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy and the electrical energy may be transmitted to a converter and/or a transformer housed within the tower and subsequently deployed to a utility grid. Modern wind power generation systems typically take the form of a wind farm having multiple wind turbine generators that are operable to supply power to a transmission system providing power to an electrical grid.

Wind turbines can be distinguished in two types: fixed speed and variable speed turbines. Conventionally, variable speed wind turbines are controlled as current sources connected to an electrical grid. In other words, the variable speed wind turbines rely on a grid frequency detected by a phase locked loop (PLL) as a reference and inject a specified amount of current into the grid. The conventional current source control of the wind turbines is based on the assumptions that the grid voltage waveforms are fundamental voltage waveforms with fixed frequency and magnitude and that the penetration of wind power into the grid is low enough so as to not cause disturbances to the grid voltage magnitude and frequency. Thus, the wind turbines simply inject the specified current into the grid based on the fundamental voltage waveforms. However, with the rapid growth of the wind power, wind power penetration into some grids has increased to the point where wind turbine generators have a significant impact on the grid voltage and frequency. When wind turbines are located in a weak grid, wind turbine power fluctuations may lead to an increase in magnitude and frequency variations in the grid voltage. These fluctuations may adversely affect the performance and stability of the PLL and wind turbine current control.

As such, it may be desirable to operate asynchronous power generating assets, such as some wind turbines, as a grid-forming asset. Generally, grid-forming type converters may provide a voltage-source characteristic, where the angle and magnitude of the voltage are controlled to achieve the regulation functions needed by the grid. With this structure, current will flow according to the demands of the grid while the converter contributes to establishing a voltage and frequency for the grid. This characteristic is comparable to conventional generators based on a turbine driving a synchronous machine. Thus, the asynchronous power generating assets may share the burden of grid formation with other grid-forming sources, such as fossil-fuel-based generators, connected to the grid.

Document US 2021/010 456 A1 describes methods of operating a wind turbine having a generator and a power converter. The methods may comprise: determining a reduced first power setpoint in response to an operational condition; reducing active power from a line-side converter to an electrical grid according to the reduced first power setpoint; determining a reduced power setpoint for a machine-side converter; reducing a torque applied to the generator by the machine-side converter such that active power according to the reduced second power setpoint is produced by the generator; and dissipating a power surplus in one or more resistive elements as long as the second power setpoint is superior to the first power setpoint. Further, US 2016/285252 A1 describes an electrical system for controlling a wind turbine. The electrical system includes a first resistive element, a storage element and a controller. The first resistive element and the storage element are coupled to a DC link of the wind turbine. The controller is used for switching between the first resistive element and the storage element in response to a grid side fault condition to minimize mechanical loads induced by the grid side fault condition. Document D3 US 2009/206606 A1 relates to an improved wind turbine, of the type which employs doubly fed induction generators (DFIG), and a wind park including the same, which permits the use of lighter weight turbines, with the ability to have greater energy capture, more precise control of asymmetrical phases and enhanced maintenance and support of the grid during fault conditions.

Many asynchronous power generating assets utilize grid-connected power converters to achieve certain dynamic control functions, including regulating speed, power, and mechanical loading of turbine components. For example, under rapidly changing wind conditions, the wind turbines may employ a grid connected power converter to help regulate the speed. This control function may change the active power that is injected into the electrical grid by the power generating asset. For example, in order to achieve the speed regulation function, the torque of the generator may be increased. This may, in turn, result in an increase in the total power output of the generator. In this way, the power needed to achieve the turbine control functions are directly coupled the power injected to the grid.

However, the changes in injected active power may interfere with required grid-forming functions when the power generating asset is operated as a grid-forming asset. Additionally, the changes in injected active power may be limited by grid constraints regardless of whether the power generating asset is operated as a grid-forming or grid-following asset. For example, during transient grid events, active power generation may be limited to prioritize reactive power for system voltage support. Additionally, power transfer limits of transmission systems may be constrained due to physical limits of the power transmission system or the loads connected to the grid. Accordingly, it may be desirable to achieve the dynamic control functions without changing the active power that is injected into electrical grid as a result thereof.

Thus, the present disclosure is directed to a system and method for controlling power generating assets having a non-deliverable component of a total power output to the electrical grid to address the aforementioned issues.

### BRIEF DESCRIPTION

Aspects and advantages of the invention will be set forth in part in the following description, or may be obvious from the description, or may be learned through practice of the invention.

In one aspect, the present disclosure provides a method for controlling a power generating asset having a generator according to claim 1. The generator is a double-fed generator having a stator operably coupled to a transformer and a rotor operably coupled to the transformer via a power converter. The method includes determining, via a controller of the power generating asset, a non-deliverable component and a deliverable component of a total power output of the generator. The method further includes determining, via a compensation module of the controller, a first control signal based, at least in part, on the non-deliverable component, the first control signal being configured to establish a modified rotor current set point. The method also includes determining, via a buffer control module of the controller, a buffer control signal for a DC energy buffer based, at least in part, on the non-deliverable component, the DC energy buffer being operably coupled between a line-side converter and a rotor-side converter of the power converter. Moreover, the method includes precluding delivery of the non-deliverable component to an electrical grid by delivering the non-deliverable component to or from the DC energy buffer via the line-side converter in response to the first control signal and the buffer control signal. Thus, the method also includes delivering the deliverable component of the total power output of the generator to the electrical grid.

In another aspect, the present disclosure provides a system for operating a power generating asset so as to provide grid forming control according to claim 13. The system includes a double-fed generator connected to an electrical grid, and a controller communicatively coupled to the generator. The controller includes at least one processor and a plurality of modules configured to perform a plurality of operations. The plurality of operations may include any of the operations and/or features described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a power generating asset configured as a wind turbine according to the present disclosure;
FIG. 2 illustrates a schematic diagram of one embodiment of an electrical system for use with the power generating asset according to the present disclosure;
FIG. 3 illustrates a block diagram of one embodiment of a controller for use with the power generating asset according to the present disclosure;
FIG. 4 illustrates a control architecture for one embodiment of a control logic for operating the power generating asset according to the present disclosure; and
FIG. 5 illustrates a flow diagram of one embodiment of a method for controlling a power generating asset via the control architecture of FIG. 4 according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention, which is defined by the claims.

Generally, the present disclosure is directed to systems and methods for controlling a power generating asset, such as a wind turbine, connected to an electrical grid. In particular, the systems and methods disclosed herein may be employed to achieve certain dynamic control functions while reducing or minimizing the change in active power delivered to the electrical grid. For example, generator torque may be increased during a low-voltage ride through event in order to reduce or minimize changes in rotor speed caused by the grid fault. This increase in generator torque may result in an increase in the active power delivered to the electrical grid, which can have a negative impact on grid stability. However, the systems and methods disclosed herein may facilitate the utilization of generator torque to reduce impacts of grid events on the drivetrain of the power generating asset without resulting in a corresponding change (e.g., increase) in the magnitude of the active power delivered to the electrical grid. In other words, the systems and methods described herein may decouple control of drivetrain shaft power from the amount of active power injected into the electrical grid. This may, in turn, permit the power generating asset to manage loading on the drivetrain independent of grid constraints. It should be appreciated that such a decoupling of the drivetrain shaft power from the active power injected into the electrical grid may be desirable in grid-forming applications.

By way of illustration, when the power generating asset is connected to a very weak grid, the power that can be injected into the grid is constrained by the impedance of the grid and the loads within the system. During certain events, the wind turbine may need to rapidly increase or decrease the torque of the generator to appropriately control speed and loading on the mechanical components of the drivetrain. Examples of these types of events include the short time window following grid faults or very high wind events. During these events, the physical power constraints imposed by the grid may be not allow the wind turbine to change power enough to manage loading on the wind turbine. In these circumstances, the wind turbine may lose control of rotor speed or torque and will be required to shut down. However, by decomposing the power needs of the drivetrain into deliverable and non-deliverable components, the risks of this shutdown are reduced since a non-deliverable component can be used to manage the torque/power needs of the turbine despite the constraints of the grid. Accordingly, the non-deliverable component of the total power output may be delivered to/from a DC energy buffer. The DC energy buffer may be a component of a converter of the power generating asset. The non-deliverable component may then be dissipated and/or stored. When stored, the non-deliverable component may be utilized to further support operations of the power generating asset.

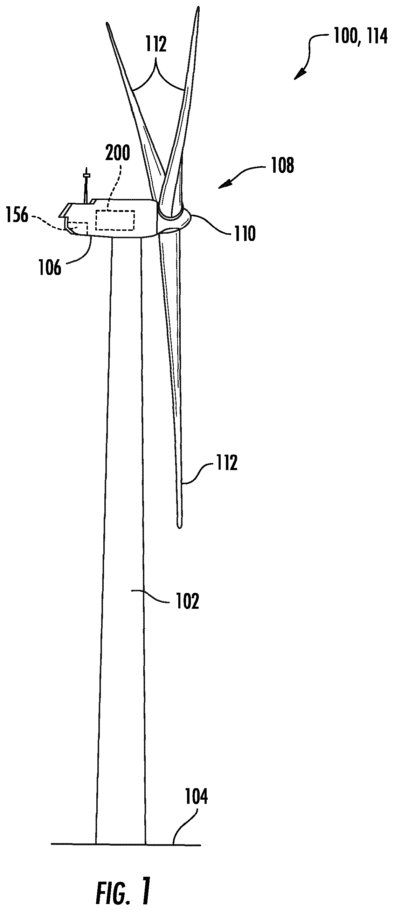

Referring now to the drawings, FIG. 1 illustrates a perspective view of one embodiment of a power generating asset 100 according to the present disclosure. As shown, the power generating asset 100 may be configured as a wind turbine 114.

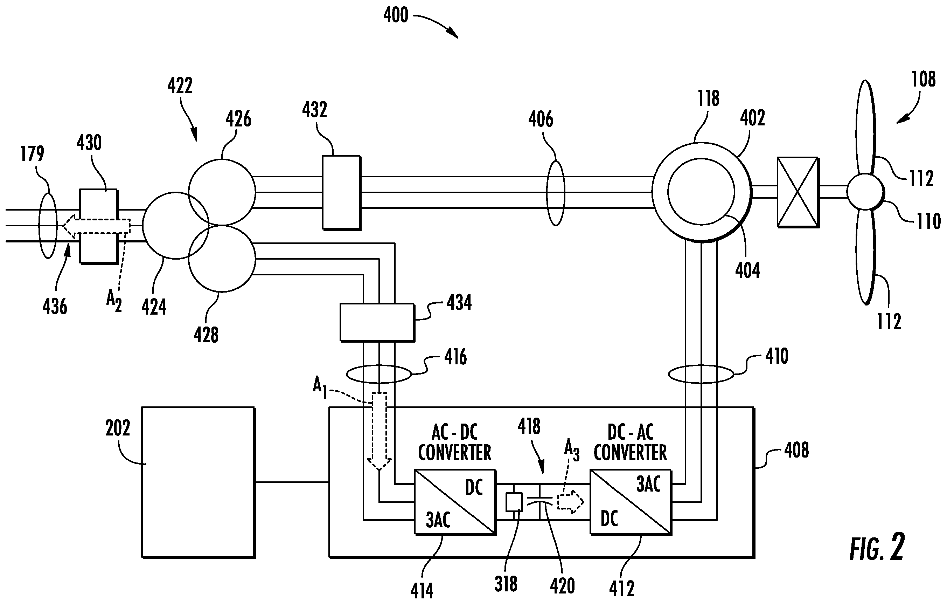

When configured as a wind turbine 114, the power generating asset 100 may generally include a tower 102 extending from a support surface 104, a nacelle 106, mounted on the tower 102, and a rotor 108 coupled to the nacelle 106. The rotor 108 includes a rotatable hub 110 and at least one rotor blade 112 coupled to and extending outwardly from the hub 110. For example, in the illustrated embodiment, the rotor 108 includes three rotor blades 112. However, in an alternative embodiment, the rotor 108 may include more or less than three rotor blades 112. Each rotor blade 112 may be spaced about the hub 110 to facilitate rotating the rotor 108 to enable kinetic energy to be transferred from the wind into usable mechanical energy, and subsequently, electrical energy. For instance, the hub 110 may be rotatably coupled to an electric generator 118 (FIG. 2) of an electrical system 400 (FIG. 2) positioned within the nacelle 106 to permit electrical energy to be produced.

The wind turbine 114 may also include a controller 200 centralized within the nacelle 106. However, in other embodiments, the controller 200 may be located within any other component of the wind turbine 114 or at a location outside the wind turbine. Further, the controller 200 may be communicatively coupled to any number of the components of the wind turbine 114 in order to control the components. As such, the controller 200 may include a computer or other suitable processing unit. Thus, in several embodiments, the controller 200 may include suitable computer-readable instructions that, when implemented, configure the controller 200 to perform various different functions, such as receiving, transmitting and/or executing wind turbine control signals.

Referring now to FIG. 2, wherein an exemplary electrical system 400 of the power generating asset 100 is illustrated. As shown, the generator 118 is coupled to the rotor 108 for producing electrical power from the rotational energy generated by the rotor 108. Accordingly, in an embodiment, the electrical system 400 may include various components for converting the kinetic energy of the rotor 108 into an electrical output in an acceptable form to a connected power grid 179. In an embodiment, the generator 118 is a double-fed induction generator (DFIG) having a stator 402 and a generator rotor 404. The generator 118 is coupled to a stator bus 406 and a power converter 408 via a rotor bus 410. In such a configuration, the stator bus 406 may provide an output multiphase power (e.g. three-phase power) from a stator of the generator 118, and the rotor bus 410 may provide an output multiphase power (e.g. three-phase power) of the generator rotor 404 of the generator 118. Additionally, the generator 118 is coupled via the rotor bus 410 to a rotor side converter 412. The rotor side converter 412 is coupled to a line-side converter 414 which, in turn, may be coupled to a line-side bus 416.

In an embodiment, the rotor side converter 412 and the line-side converter 414 may be configured for normal operating mode in a three-phase, pulse width modulation (PWM) arrangement using insulated gate bipolar transistors (IGBTs) as switching devices 438. Other suitable switching devices may be used, such as insulated gate commuted thyristors, MOSFETs, bipolar transistors, silicone-controlled rectifiers, and/or other suitable switching devices. The rotor side converter 412 and the line-side converter 414 may be coupled via a DC link 418 across a DC link capacitor 420.

In an embodiment, the power converter 408 may be coupled to the controller 200 configured as a converter controller 202 to control the operation of the power converter 408. For example, the converter controller 202 may send control commands to the rotor side converter 412 and the line-side converter 414 to control the modulation of switching elements used in the power converter 408 to establish a desired generator torque setpoint and/or power output.

As further depicted in FIG. 2, the electrical system 400 includes a transformer 422 coupling the power generating asset of 100 to the electrical grid 179 via a point of interconnect (POI) 436. The transformer 422 may, in an embodiment, be a 3-winding transformer which includes a high voltage (e.g., greater than 12 KVAC) primary winding 424. The high voltage primary winding 424 may be coupled to the electrical grid 179. The transformer 422 may also include a medium voltage (e.g., 6 KVAC) secondary winding 426 coupled to the stator bus 406 and a low voltage (e.g., 575 VAC, 690 VAC, etc.) auxiliary winding 428 coupled to the line bus 416. It should be appreciated that the transformer 422 can be a three-winding transformer as depicted, or alternatively, may be a two-winding transformer having only a primary winding 424 and a secondary winding 426; may be a four-winding transformer having a primary winding 424, a secondary winding 426, and auxiliary winding 428, and an additional auxiliary winding; or may have any other suitable number of windings.

In an embodiment, the electrical system 400 may include various protective features (e.g., circuit breakers, fuses, contactors, and other devices) to control and/or protect the various components of the electrical system 400. For example, the electrical system 400 may, in an embodiment, include a grid circuit breaker 430, a stator bus circuit breaker 432, and/or a line bus circuit breaker 434. The circuit breaker(s) 430, 432, 434 of the electrical system 400 may connect or disconnect corresponding components of the electrical system 400 when a condition of the electrical system 400 approaches a threshold (e.g., a current threshold and/or an operational threshold) of the electrical system 400.

As depicted in FIG. 1, in an embodiment, the power generating asset 100 may include at least one operational sensor 156. The operational sensor(s) 156 may be configured to detect a performance of the power generating asset 100, e.g., in response to the environmental condition. In an embodiment, the operational sensor(s) 156 may be configured to monitor a plurality of electrical conditions, such as slip, stator voltage and current, rotor voltage and current, line-side voltage and current, DC-link charge and/or any other electrical condition of the power generating asset.

It should also be appreciated that, as used herein, the term "monitor" and variations thereof indicates that the various sensors of the power generating asset 100 may be configured to provide a direct measurement of the parameters being monitored or an indirect measurement of such parameters. Thus, the sensors described herein may, for example, be used to generate signals relating to the parameter being monitored, which can then be utilized by the controller 200 to determine a condition or response of the power generating asset 100.

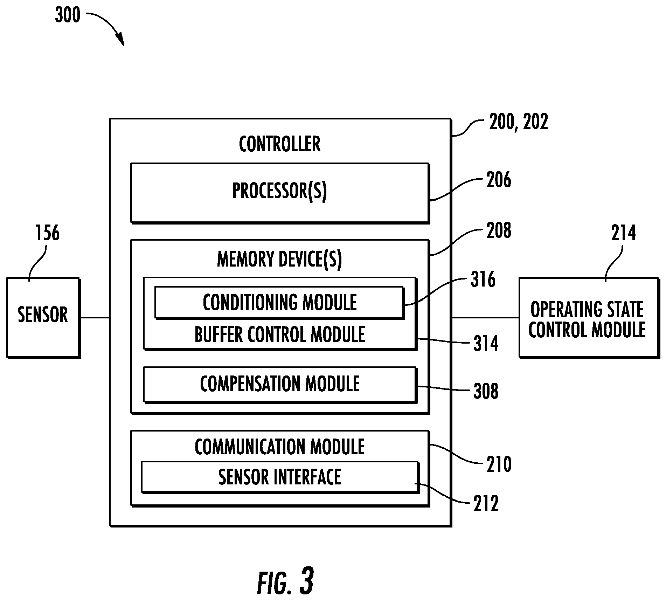

Referring to FIGS.2-4, multiple embodiments of a system 300 for controlling the power generating asset 100 according to the present disclosure are presented. As shown particularly in FIG. 3, a schematic diagram of one embodiment of suitable components that may be included within the system 300 is illustrated. For example, as shown, the system 300 may include the controller 200 communicatively coupled to the sensor(s) 156. Further, as shown, the controller 200 includes one or more processor(s) 206 and associated memory device(s) 208 configured to perform a variety of computer-implemented functions (e.g., performing the methods, steps, calculations and the like and storing relevant data as disclosed herein). Additionally, the controller 200, may also include a communications module 210 to facilitate communications between the controller 200, and the various components of the power generating asset 100. Further, the communications module 210 may include a sensor interface 212 (e.g., one or more analog-to-digital converters) to permit signals transmitted from the sensor(s) 156 to be converted into signals that can be understood and processed by the processors 206. It should be appreciated that the sensor(s) 156 may be communicatively coupled to the communications module 210 using any suitable means. For example, the sensor(s) 156 may be coupled to the sensor interface 212 via a wired connection. However, in other embodiments, the sensor(s) 156 may be coupled to the sensor interface 212 via a wireless connection, such as by using any suitable wireless communications protocol known in the art. Additionally, the communications module 210 may also be operably coupled to an operating state control module 214 configured to change at least one turbine operating state of the power generating asset 100, such as an operating state of the generator 118.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 208 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 208 may generally be configured to store suitable computer-readable instructions that, when implemented by the processor(s) 206, configure the controller 200 to perform various functions as described herein, as well as various other suitable computer-implemented functions.

As disclosed herein, in an embodiment the system 300 may be configured to control a component of power flow in the stator 402 of the generator 118 without changing the magnitude of the power injected into the electrical grid 179 in grid-forming applications. This may be accomplished by diverting a portion of the power generated by the generator 118 away from the electrical grid 179. Accordingly, the controller 200 may determine a non-deliverable component 302 of the total power output 304 of the generator 118. Additionally, the controller 200 may determine a deliverable component 306 of the total power output 304 of the generator 118. The total power output 304 may reflect the total power developed by the generator stator 402 and the generator rotor 404. The deliverable component 306 of the total power output 304 may correspond to a maximal active power magnitude that may be consistent with grid constraints and/or grid-forming considerations. The non-deliverable component 302 may correspond to a portion of the total power output 304 that is developed by the generator 118 in response to a torque setpoint that corresponds to a dynamic control function.

This non-deliverable component 302 may be necessary to achieve certain performance of the mechanical system of the wind turbine, but grid constraints restrict this component from being realized by changes of power injected into the grid. This non-deliverable component may be related to excessive power of the turbine that exceeds the grid constraints, thereby making the non-deliverable component of power a positive value. Alternatively, the non-deliverable component may be related to insufficient ability to reduce the power to the grid (due system loads), thereby resulting in a non-deliverable component of power that is negative.

In order to control the power generating asset 100 when the total power output 304 has a non-deliverable component 302, the converter controller 202 utilizes a compensation module 308 to determine a first control signal 310. The first control signal 310 is configured to establish a modified rotor current setpoint 312. The converter controller 202 utilizes a buffer control module 314 to determine a buffer control signal 316 for a DC energy buffer 318. The first control signal 310 and the buffer control signal 316 are based, at least in part, on the non-deliverable component 302 and are determined simultaneously. The DC energy buffer 318 is operably coupled between the line-side converter 414 and the rotor-side converter 412 of the power converter 408. Accordingly, the system 300 may preclude delivery of the non-deliverable component 302 to the electrical grid 179 by delivering (as indicated by arrow A₁) the non-deliverable component 302 to the energy buffer 318. In an embodiment, the delivery of the non-deliverable component 302 to the DC energy buffer 318 may be via the line-side converter 414. The delivery of the non-deliverable component 302 to the DC energy buffer 318 is accomplished in response to the first control signal 310 and the buffer control signal 316. With the non-deliverable component 302 being diverted to the DC energy buffer 318, the deliverable component 306 of the total power output 304 of the generator 118 is delivered (as indicated by arrow A₂) to the electrical grid 179.

In an embodiment, the non-deliverable component 302 may include a portion of the total power output 304 of the generator 118 that exceeds an active power delivery limit. The active power delivery limit may, for example, correspond to a constraint imposed by grid codes and or physics-based constraints of the power generating asset 100, the electrical grid 179, and/or the transmission system connected therebetween. In other words, the non-deliverable component 302 may be a component of stator power that is not intended for injection into the electrical grid 179 but is nevertheless generated during the execution of a dynamic control function. According to the present disclosure, this component of stator power may be diverted from the electrical grid 179 to the DC energy buffer 318.

The following grid-following embodiment is not encompassed by the wording of the claims. The power generating asset 100 may, in an embodiment, be configured as a grid-following power generating asset 100. In such an embodiment, the first control signal 310 may be a stator current modifier 320. Similarly, in an embodiment, the first control signal 310 may be a rotor current modifier 322. The stator current modifier 320 and/or the rotor current modifier 322 may be configured to develop a desired change in the stator power output.

The power generating asset 100 is configured as a grid-forming power generating asset 100. Applications to grid-forming control for a double-fed wind turbine generator are disclosed in PCT/US2020/013787 entitled "System and Method for Providing Grid-Forming Control for a Double-Fed Wind Turbine Generator".

When the power generating asset 100 is configured as a grid-forming power generating asset 100, the first control signal 310 is an angle command modifier 324. The angle command modifier 324 is configured to alter a desired voltage angle command so as to develop a desired change in the stator power output.

In order to determine the angle command modifier 324, the compensation module 308 may, in an embodiment, receive a stator voltage magnitude feedback 326 and a synthesized voltage magnitude command 328. The compensation module 308 may then determine a product of the non-deliverable component 302 and a reactance. (The reactance may be a reactance from a PLL reference node to voltage synthesized within the generator 118.) This product may then be divided by a product of the stator voltage magnitude feedback 326 and the synthesized voltage magnitude command 328 via the compensation module 308 in order to determine a quotient. The compensation module 308 may determine the angle command modifier 324 (e.g., the first control signal 310) as an arcsin of the quotient.

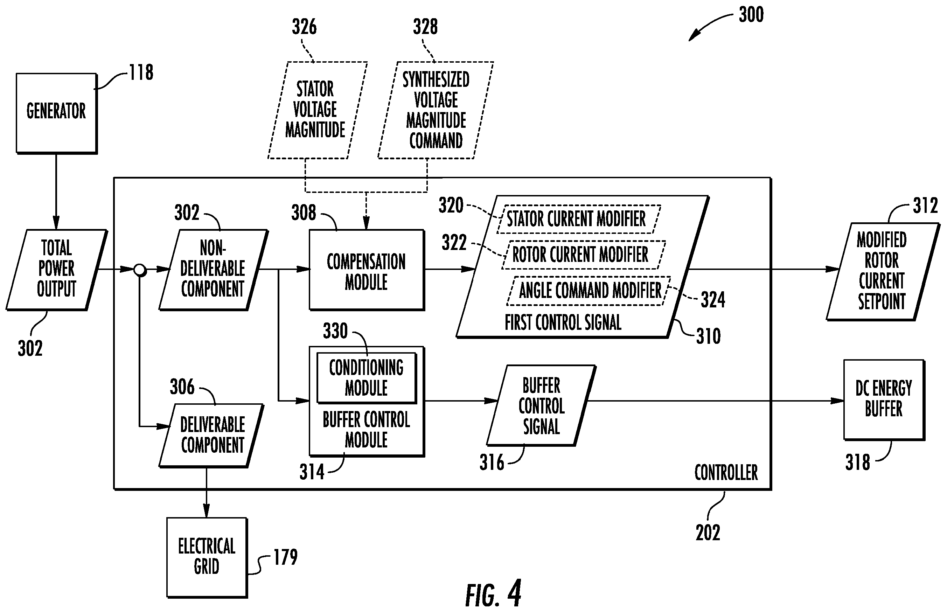

As depicted in FIGS. 2 and 4, in an embodiment, the buffer control module 314 may include a conditioning module 330. The conditioning module 330 may be configured to manage different components of the non-deliverable component 302.

In order to determine the buffer control signal 316, the conditioning module 330 may, in an embodiment filter the non-deliverable component 302. In another embodiment, the conditioning module may sum multiple different components of the non-deliverable component 302.

In an embodiment, the conditioning module 330 may apply a dynamic gain to the filtered non-deliverable component. Applying the dynamic gain may compensate for an inherent transfer function between the first control signal 310 and the change in stator active power output.

In an additional embodiment, the conditioning module 330 may apply at least one limit to the buffer control signal 316. The limit(s) may, for example, be based on a maximum and/or minimum rating of a component of the power generating asset 100 for example, the conditioning module 330 may utilize the limit to respect equipment ratings for the line-side converter 414, the stator 402, the rotor 404, and/or the DC energy buffer 318. It should be appreciated that the limit(s) may be a dynamic limit that changes based on the nominal active power, reactive power, and voltage operating point of the generator 118. In other words, in an embodiment, the limit(s) may vary in accordance with an active power operating point, a reactive power operating point, and/or a voltage operating point of the generator 118.

In an embodiment, the DC energy buffer 318 may be a resistive element. In such an embodiment, the DC energy buffer 318 may absorb and/or dissipate the non-deliverable component 302. For example, the non-deliverable component 302 may convert at least a portion of the non-deliverable component 302 into heat.

In an additional embodiment, the DC energy buffer 318 may be configured as an energy storage device. In such an embodiment, the DC energy buffer 318 may store at least a portion of the non-deliverable component 302. The stored portion may then be available to support operations of the power generating asset 100. For example, the stored portion may, in an embodiment, be delivered (as depicted by arrow A₃) from the DC energy buffer 318 to the rotor side converter 412. In such an embodiment, the non-deliverable component 302 may correspond to a power circulated (via arrows A₂ and A₃) between the stator 402 and the DC energy buffer 318. The non-deliverable component 302 may, for example, be circulated between the stator 402 and the DC energy buffer 318 during a grid fault event (e.g., a low-voltage event, a zero-voltage event, and/or a high-voltage event) and/or a recovery therefrom. It should be appreciated that the circulation of the non-deliverable component 302 may facilitate continued operation and/or recovery of the power generating asset 100 in the presence of the grid fault event.

In an embodiment, the first control signal 310 may be one of a plurality of control signals 310. Additionally, in an embodiment the buffer control signal 316 may be one of a plurality of buffer control signals 316. The pluralities of control signals 310 and the pluralities of buffer control signals 316 may be configured to address different components of the non-deliverable component 302. In such an embodiment, the converter controller 202 may utilize the compensation module 308 to determine a consolidated first control signal by summing each first control signal 310 of the plurality of first control signals 310. Additionally, the converter controller 202 may utilize the buffer control module 314 to determine a consolidated buffer control signal by summing each buffer control signal 316 of the plurality of buffer control signals 316.

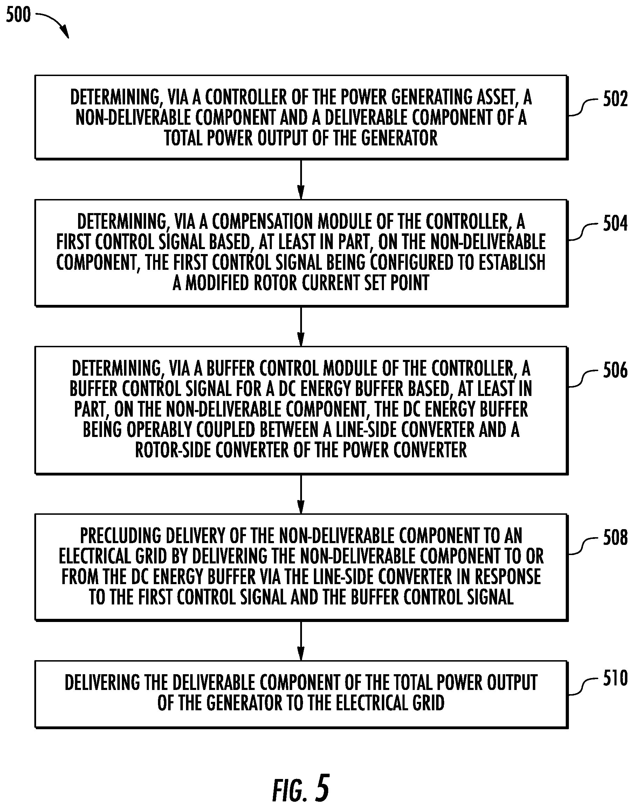

Referring now to FIG. 5, a flow diagram of one embodiment of a method 500 for controlling the power generating asset is presented. The method 500 may be implemented using, for instance, the system 300 of the present disclosure discussed above with references to FIGS. 2-4 to divert the non-deliverable component of the total power output of the generator. FIG. 5 depicts steps performed in a particular order for purposes of illustration and discussion.

As shown at (502), the method 500 includes determining, via a controller of the power generating asset, a non-deliverable component and a deliverable component of a total power output of the generator. As shown at (504), the method 500 includes determining, via a compensation module of the controller, a first control signal based, at least in part, on the non-deliverable component. The first control signal is configured to establish a modified rotor current set point. As shown at (506), the method 500 includes determining, via a buffer control module of the controller, a buffer control signal for a DC energy buffer based, at least in part, on the non-deliverable component. The DC energy buffer is operably coupled between a line-side converter and a rotor-side converter of the power converter of the power generating asset. As shown at (508), the method 500 includes precluding delivery of the non-deliverable component to an electrical grid by delivering the non-deliverable component to the DC energy buffer via the line-side converter in response to the first control signal and the buffer control signal. Additionally, as shown at (510), the method 500 includes delivering the deliverable component of the total power output of the generator to the electrical grid.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A method (500) for controlling a power generating asset (100) having a generator (118), the power generating asset (100) being configured as a grid-forming power generating asset, the generator (118) being a double-fed generator having a stator (402) operably coupled to a transformer (422) and a rotor (404) operably coupled to the transformer (422) via a power converter (408), the method (500) comprising:
determining (502), via a controller (202) of the power generating asset (100), a non-deliverable component (302) and a deliverable component (306) of a total power output (304) of the generator (118);
determining (504), via a compensation module (308) of the controller (202), a first control signal (310) based, at least in part, on the non-deliverable component (302), the first control signal (310) being configured to establish a modified rotor current set point, the first control signal (310) being an angle command modifier configured to alter a desired voltage angle command so as to develop a desired change in a stator power output;
determining (506), via a buffer control module (314) of the controller (202), a buffer control signal (316) for a DC energy buffer (318) based, at least in part, on the non-deliverable component (302), the DC energy buffer (318) being operably coupled between a line-side converter (414) and a rotor-side converter (412) of the power converter, the first control signal (310) and the buffer control signal (316) being determined simultaneously;
precluding (508) delivery of the non-deliverable component (302) to an electrical grid (179) by delivering the non-deliverable component (302) to or from the DC energy buffer (318) via the line-side converter (414) in response to the first control signal (310) and the buffer control signal (316); and
delivering (510) the deliverable component (306) of the total power output (304) of the generator (118) to the electrical grid.

2. The method (500) of claim 1, wherein the non-deliverable component (302) comprises a portion of the total power output (304) of the generator (118) which exceeds an active power delivery limit.

3. The method (500) of any of the preceding claims, wherein the power generating asset (100) is a wind turbine.

4. The method (500) of any of the preceding claims, wherein determining the angle command modifier further comprises:
receiving, via the compensation module, a stator voltage magnitude feedback and a synthesized voltage magnitude command;
determining, via the compensation module, a quotient of a product of the non-deliverable component (302) and a reactance divided by a product of the stator voltage magnitude feedback and the synthesized voltage magnitude command; and
determining, via the compensation module, the angle command modifier as an arcsine of the quotient.

5. The method (500) of any of the preceding claims, wherein the buffer control module further comprises a conditioning module.

6. The method (500) of claim 5, wherein determining the buffer control signal (316) further comprises:
filtering, via the conditioning module, the non-deliverable component (302);
applying, via the conditioning module, a dynamic gain to the filtered non-deliverable component (302) in order to compensate for an inherent transfer function between the first control signal (310) and a change in stator active power output; and
applying, via the conditioning module, at least one limit to the buffer control signal (316) based on a maximum or minimum rating of a component of the power generating asset (100).

7. The method (500) of claim 6, wherein the at least one limit is a dynamic limit that varies in accordance with at least one of an active power operating point, a reactive power operating point, or a voltage operating point of the generator (118).

8. The method (500) of any of the preceding claims, wherein the DC energy buffer (318) is a resistive element.

9. The method (500) of any of the preceding claims, wherein the DC energy buffer (318) is an energy storage device.

10. The method (500) of claim 9, further comprising:
delivering at least a portion of the non-deliverable component (302) from the DC energy buffer (318) to the rotor side converter.

11. The method (500) of any of the preceding claims, wherein the non-deliverable component (302) corresponds to a power circulated between the stator and DC energy buffer (318) during a grid fault event.

12. The method (500) of any of the preceding claims, wherein the first control signal (310) is one of a plurality of first control signals (310), wherein the buffer control signal (316) is one of a plurality of buffer control signals, wherein the pluralities of control signals and the pluralities of buffer control signals are configured to address different components of the non-deliverable component (302), the method further comprising:
determining, via the compensation module, a consolidated first control signal (310) by summing each first control signal (310) of the plurality of first control signals; and
determining, via the buffer control module, a consolidated buffer control signal (316) by summing each buffer control signal of the plurality of buffer control signals.

13. A system (300) for operating a grid-forming power generating asset (100), the system comprising:
a double-fed generator (118) connected to a power grid; and
a controller (202) communicatively coupled to the generator (118), the controller (202) comprising at least one processor and a plurality of modules configured to perform a plurality of operations, the plurality of operations comprising:
determining a non-deliverable component (302) and a deliverable component (306) of a total power output (304) of the generator (118),
determining, via a compensation module of the controller (202), a first control signal (310) based, at least in part, on the non-deliverable component (302), the first control signal (310) being configured to establish a modified rotor current set point, the first control signal (310) being an angle command modifier configured to alter a desired voltage angle command so as to develop a desired change in a stator power output of the double-fed generator (118),
simultaneously to determining the first control signal (310), determining, via a buffer control module of the controller (202), a buffer control signal (316) for a DC energy buffer (318) based, at least in part, on the non-deliverable component (302), the DC energy buffer (318) being operably coupled between a line-side converter (414) and a rotor-side converter (412) of a power converter,
precluding delivery of the non-deliverable component (302) to an electrical grid by delivering the non-deliverable component (302) to the DC energy buffer (318) via the line-side converter (414) in response to the first control signal (310) and the buffer control signal (316), and
delivering the deliverable component (306) of the total power output (304) of the generator (118) to the electrical grid.

14. The system (300) of claim 13, wherein the non-deliverable component (302) comprises a portion of the total power output (304) of the generator (118) which exceeds an active power delivery limit.

15. The system (300) of claim 14, wherein the plurality of operations comprises:
receiving, via the compensation module, a stator voltage magnitude feedback and a synthesized voltage magnitude command;
determining, via the compensation module, a quotient of a product of the non-deliverable component (302) and a reactance divided by a product of the stator voltage magnitude feedback and the synthesized voltage magnitude command; and
determining, via the compensation module, the first control signal (310) as an arcsine of the quotient.

## Patentansprüche

1. Verfahren (500) zur Steuerung einer Stromerzeugungsanlage (100) mit einem Generator (118), wobei die Stromerzeugungsanlage (100) als netzbildende Stromerzeugungsanlage konfiguriert ist, der Generator (118) ein doppelt gespeister Generator ist, der einen Stator (402), der betriebsmäßig mit einem Transformator (422) gekoppelt ist, und einen Rotor (404) aufweist, der über einen Leistungswandler (408) betriebsmäßig mit dem Transformator (422) gekoppelt ist, wobei das Verfahren (500) aufweist:
Bestimmen (502) einer nicht lieferbaren Komponente (302) und einer lieferbaren Komponente (306) einer Gesamtleistungsabgabe (304) des Generators (118) über eine Steuerung (202) der Stromerzeugungsanlage (100);
Bestimmen (504) eines ersten Steuersignals (310) über ein Kompensationsmodul (308) der Steuerung (202), das zumindest teilweise auf der nicht lieferbaren Komponente (302) basiert, wobei das erste Steuersignal (310) dazu ausgelegt ist, einen modifizierten Rotorstromsollwert festzulegen, und wobei das erste Steuersignal (310) ein Winkelbefehlsmodifikator ist, der dazu ausgelegt ist, einen gewünschten Spannungswinkelbefehl so zu verändern, dass eine gewünschte Änderung der Statorleistungsabgabe entsteht;
Bestimmen (506) eines Puffersteuersignals (316) für einen Gleichstromenergiepuffer (318) über ein Puffersteuermodul (314) der Steuerung (202), das zumindest teilweise auf der nicht lieferbaren Komponente (302) basiert, wobei der Gleichstromenergiepuffer (318) betriebsmäßig zwischen einen netzseitigen Wandler (414) und einen rotorseitigen Wandler (412) des Leistungswandlers geschaltet ist, wobei das erste Steuersignal (310) und das Puffersteuersignal (316) gleichzeitig bestimmt werden;
Verhindern (508) der Lieferung der nicht lieferbaren Komponente (302) an ein Stromnetz (179) durch Zuführen der nicht lieferbaren Komponente (302) an den oder aus dem Gleichstromenergiepuffer (318) über den netzseitigen Wandler (414) als Reaktion auf das erste Steuersignal (310) und das Puffersteuersignal (316); und
Liefern (510) der lieferbaren Komponente (306) der Gesamtleistungsabgabe (304) des Generators (118) an das Stromnetz.

2. Verfahren (500) nach Anspruch 1, wobei die nicht lieferbare Komponente (302) einen Teil der Gesamtleistungsabgabe (304) des Generators (118) umfasst, der eine Wirkleistungsabgabebegrenzung überschreitet.

3. Verfahren (500) nach einem der vorstehenden Ansprüche, wobei die Stromerzeugungsanlage (100) eine Windkraftanlage ist.

4. Verfahren (500) nach einem der vorstehenden Ansprüche, wobei das Bestimmen des Winkelbefehlsmodifikators ferner aufweist:
Empfangen einer Statorspannungsamplitudenrückmeldung und eines synthetisierten Spannungsamplitudenbefehls über das Kompensationsmodul;
Bestimmen, über das Kompensationsmodul, eines Quotienten aus einem Produkt der nicht lieferbaren Komponente (302) und einer Reaktanz, dividiert durch ein Produkt der Statorspannungsamplitudenrückmeldung und des synthetisierten Spannungsamplitudenbefehls; und
Bestimmen des Winkelbefehlsmodifikators über das Kompensationsmodul als Arkussinus des Quotienten.

5. Das Verfahren (500) nach einem der vorstehenden Ansprüche, wobei das Puffersteuerungsmodul ferner ein Aufbereitungsmodul aufweist.

6. Verfahren (500) nach Anspruch 5, wobei das Bestimmen des Puffersteuersignals (316) ferner aufweist:
Filtern der nicht lieferbaren Komponente (302) über das Aufbereitungsmodul;
Anwenden einer dynamischen Verstärkung über das Aufbereitungsmodul auf die gefilterte nicht lieferbare Komponente (302), um eine inhärente Übertragungsfunktion zwischen dem ersten Steuersignal (310) und einer Änderung der Statorwirkleistungsabgabe zu kompensieren; und
Anwenden mindestens einer Begrenzung auf das Puffersteuersignal (316) über das Aufbereitungsmodul auf der Grundlage einer maximalen oder minimalen Nennleistung einer Komponente der Stromerzeugungsanlage (100).

7. Verfahren (500) nach Anspruch 6, wobei die mindestens eine Begrenzung eine dynamische Begrenzung ist, die in Abhängigkeit von mindestens einem aus einem Wirkleistungsbetriebspunkt, einem Blindleistungsbetriebspunkt oder einem Spannungsbetriebspunkt des Generators (118) variiert.

8. Verfahren (500) nach einem der vorstehenden Ansprüche, wobei der Gleichstromenergiepuffer (318) ein Widerstandselement ist.

9. Verfahren (500) nach einem der vorstehenden Ansprüche, wobei der Gleichstromenergiepuffer (318) eine Energiespeichervorrichtung ist.

10. Verfahren (500) nach Anspruch 9, weiter aufweisend:
Zuführen mindestens eines Teils der nicht lieferbaren Komponente (302) aus dem Gleichstromenergiepuffer (318) an den rotorseitigen Wandler.

11. Verfahren (500) nach einem der vorstehenden Ansprüche, wobei die nicht lieferbare Komponente (302) einer Leistung entspricht, die während eines Netzfehlerereignisses zwischen dem Stator und dem Gleichstromenergiepuffer (318) zirkuliert.

12. Verfahren (500) nach einem der vorstehenden Ansprüche, wobei das erste Steuersignal (310) eines aus einer Vielzahl von ersten Steuersignalen (310) ist, wobei das Puffersteuersignal (316) eines aus einer Vielzahl von Puffersteuersignalen ist, wobei die Vielzahl von Steuersignalen und die Vielzahl von Puffersteuersignalen dazu konfiguriert sind, verschiedene Komponenten der nicht lieferbaren Komponente (302) zu adressieren, wobei das Verfahren weiter aufweist:
Bestimmen eines konsolidierten ersten Steuersignals (310) über das Kompensationsmodul durch Summieren jedes ersten Steuersignals (310) der Vielzahl von ersten Steuersignalen; und
Bestimmen eines konsolidierten Puffersteuersignals (316) über das Puffersteuermodul durch Summieren jedes Puffersteuersignals der Vielzahl von Puffersteuersignalen.

13. System (300) zum Betrieb einer netzbildenden Stromerzeugungsanlage (100), wobei das System aufweist:
einen an ein Stromnetz angeschlossenen doppelt gespeisten Generator (118); und
eine Steuerung (202), die kommunikativ mit dem Generator (118) gekoppelt ist, wobei die Steuerung (202) mindestens einen Prozessor und eine Vielzahl von Modulen aufweist, die dazu konfiguriert sind, eine Vielzahl von Operationen auszuführen, wobei die Vielzahl von Operationen aufweist:
Bestimmen einer nicht lieferbaren Komponente (302) und einer lieferbaren Komponente (306) einer Gesamtleistungsabgabe (304) des Generators (118);
Bestimmen eines ersten Steuersignals (310) über ein Kompensationsmodul der Steuerung (202), das zumindest teilweise auf der nicht lieferbaren Komponente (302) basiert, wobei das erste Steuersignal (310) dazu ausgelegt ist, einen modifizierten Rotorstromsollwert festzulegen, und wobei das erste Steuersignal (310) ein Winkelbefehlsmodifikator ist, der dazu ausgelegt ist, einen gewünschten Spannungswinkelbefehl so zu verändern, dass eine gewünschte Änderung der Statorleistung des doppelt gespeisten Generators (118) erzeugt wird;
gleichzeitig mit dem Bestimmen des ersten Steuersignals (310), Bestimmen eines Puffersteuersignals (316) für einen Gleichstromenergiepuffer (318) über ein Puffersteuermodul der Steuerung (202), das zumindest teilweise auf der nicht lieferbaren Komponente (302) basiert, wobei der Gleichstromenergiepuffer (318) betriebsmäßig zwischen einen netzseitigen Wandler (414) und einen rotorseitigen Wandler (412) eines Leistungswandlers geschaltet ist;
Verhindern der Lieferung der nicht lieferbaren Komponente (302) an ein Stromnetz durch Zuführen der nicht lieferbaren Komponente (302) an den Gleichstromenergiepuffer (318) über den netzseitigen Wandler (414) als Reaktion auf das erste Steuersignal (310) und das Puffersteuersignal (316); und
Liefern der lieferbaren Komponente (306) der Gesamtleistungsabgabe (304) des Generators (118) an das Stromnetz.

14. System (300) nach Anspruch 13, wobei die nicht lieferbare Komponente (302) einen Teil der Gesamtleistungsabgabe (304) des Generators (118) umfasst, der eine Wirkleistungsabgabebegrenzung überschreitet.

15. System (300) nach Anspruch 14, wobei die Vielzahl von Operationen aufweist:
Empfangen einer Statorspannungsamplitudenrückmeldung und eines synthetisierten Spannungsamplitudenbefehls über das Kompensationsmodul;
Bestimmen, über das Kompensationsmodul, eines Quotienten aus einem Produkt der nicht lieferbaren Komponente (302) und einer Reaktanz, dividiert durch ein Produkt der Statorspannungsamplitudenrückmeldung und des synthetisierten Spannungsamplitudenbefehls; und
Bestimmen des ersten Steuersignals (310) über das Kompensationsmodul als Arkussinus des Quotienten.

## Revendications

1. Procédé (500) permettant de commander un actif de génération d'énergie (100) présentant un générateur (118), l'actif de production d'énergie (100) étant configuré comme un actif de génération d'énergie formateur de réseau, le générateur (118) étant un générateur à double alimentation présentant un stator (402) accouplé de manière fonctionnelle à un transformateur (422) et un rotor (404) accouplé de manière fonctionnelle au transformateur (422) par l'intermédiaire d'un convertisseur de puissance (408), le procédé (500) comprenant :
la détermination (502), par l'intermédiaire d'un dispositif de commande (202) de l'actif de génération d'énergie (100), d'un composant non distribuable (302) et un composante distribuable (306) d'une puissance de sortie totale (304) du générateur (118) ;
la détermination (504), par l'intermédiaire d'un module de compensation (308) du dispositif de commande (202), d'un premier signal de commande (310) sur la base, au moins en partie, du composant non distribuable (302), le premier signal de commande (310) étant configuré pour établir un point de consigne de courant de rotor modifié, le premier signal de commande (310) étant un modificateur d'ordre d'angle configuré pour altérer un ordre d'angle de tension souhaitée de manière à développer un changement souhaité dans une puissance de sortie de stator ;
la détermination (506), par l'intermédiaire d'un module de commande de tampon (314) du dispositif de commande (202), d'un signal de commande de tampon (316) pour un tampon d'énergie CC (318) sur la base, au moins en partie, du composant non distribuable (302), le tampon d'énergie CC (318) étant couplé de manière fonctionnelle entre un convertisseur côté ligne (414) et un convertisseur côté rotor (412) du convertisseur de puissance, le premier signal de commande (310) et le signal de commande de tampon (316) étant déterminés simultanément ;
l'exclusion (508) de la distribution du composant non distribuable (302) à un réseau électrique (179) en distribuant le composant non distribuable (302) vers ou depuis le tampon d'énergie CC (318) par l'intermédiaire du convertisseur côté ligne (414) en réponse au premier signal de commande (310) et au signal de commande de tampon (316) ; et
la fourniture (510) du composant distribuable (306) de la puissance de sortie totale (304) du générateur (118) au réseau électrique.

2. Procédé (500) selon la revendication 1, dans lequel le composant non distribuable (302) comprend une partie de la puissance de sortie totale (304) du générateur (118) qui dépasse une limite de distribution de puissance active.

3. Procédé (500) selon l'une quelconque des revendications précédentes, dans lequel l'actif de génération d'énergie (100) est une éolienne.

4. Procédé (500) selon l'une quelconque des revendications précédentes, dans lequel la détermination du modificateur d'ordre d'angle comprend en outre :
la réception, par l'intermédiaire du module de compensation, d'un retour d'amplitude de tension de stator et un ordre d'amplitude de tension synthétisée ;
la détermination, par l'intermédiaire du module de compensation, d'un quotient d'un produit du composant non distribuable (302) et d'une réactance divisé par un produit du retour d'amplitude de tension de stator et de l'ordre d'amplitude de tension synthétisée ; et
la détermination, par l'intermédiaire du module de compensation, du modificateur d'ordre d'angle comme un arc sinus du quotient.

5. Procédé (500) selon l'une quelconque des revendications précédentes, dans lequel le module de commande de tampon comprend en outre un module de conditionnement.

6. Procédé (500) selon la revendication 5, dans lequel la détermination du signal de commande de tampon (316) comprend en outre :
le filtrage, par l'intermédiaire du module de conditionnement, du composant non distribuable (302) ;
l'application, par l'intermédiaire du module de conditionnement, d'un gain dynamique au composant non distribuable filtré (302) afin de compenser une fonction de transfert inhérente entre le premier signal de commande (310) et un changement de la puissance active de sortie du stator ; et
l'application, par l'intermédiaire du module de conditionnement, d'au moins une limite au signal de commande de tampon (316) sur la base d'un régime nominal maximal ou minimal d'un composant de l'actif de génération d'énergie (100).

7. Procédé (500) selon la revendication 6, dans lequel l'au moins une limite est une limite dynamique qui varie en fonction d'au moins l'un parmi un point de fonctionnement de puissance active, un point de fonctionnement de puissance réactive ou un point de fonctionnement de tension du générateur (118).

8. Procédé (500) selon l'une quelconque des revendications précédentes, dans lequel le tampon d'énergie CC (318) est un élément résistif.

9. Procédé (500) selon l'une quelconque des revendications précédentes, dans lequel le tampon d'énergie CC (318) est un dispositif de stockage d'énergie.

10. Procédé (500) selon la revendication 9, comprenant en outre :
la distribution d'au moins une partie du composant non distribuable (302) du tampon d'énergie CC (318) au convertisseur côté rotor.

11. Procédé (500) selon l'une quelconque des revendications précédentes, dans lequel le composant non distribuable (302) correspond à une puissance qui circule entre le stator et le tampon d'énergie CC (318) pendant un événement de défaut du réseau.

12. Procédé (500) selon l'une quelconque des revendications précédentes, dans lequel le premier signal de commande (310) est l'un d'une pluralité de premiers signaux de commande (310), dans lequel le signal de commande de tampon (316) est l'un d'une pluralité de signaux de commande de tampon, dans lequel les pluralités de signaux de commande et les pluralités de signaux de commande de tampon sont configurées pour adresser différents composants du composant non distribuable (302), le procédé comprenant en outre :
la détermination, par l'intermédiaire du module de compensation, d'un premier signal de commande consolidé (310) en ajoutant chaque premier signal de commande (310) de la pluralité de premiers signaux de commande ; et
la détermination, par l'intermédiaire du module de commande de tampon, d'un signal de commande de tampon consolidé (316) en ajoutant chaque signal de commande de tampon de la pluralité de signaux de commande de tampon.

13. Système (300) permettant d'exploiter un actif de génération d'énergie (100), le système comprenant :
un générateur à double alimentation (118) connecté à un réseau électrique ; et
un dispositif de commande (202) couplé par communication au générateur (118), le dispositif de commande (202) comprenant au moins un processeur et une pluralité de modules configurés pour effectuer une pluralité d'opérations, la pluralité d'opérations comprenant :
la détermination d'un composant non distribuable (302) et un composant distribuable (306) d'une puissance de sortie totale (304) du générateur (118),
la détermination, par l'intermédiaire d'un module de compensation du dispositif de commande (202), d'un premier signal de commande (310) sur la base, au moins en partie, du composant non distribuable (302), le premier signal de commande (310) étant configuré pour établir un point de consigne de courant de rotor modifié, le premier signal de commande (310) étant un modificateur de commande d'angle configuré pour altérer un ordre d'angle de tension souhaitée de manière à développer un changement souhaité dans une sortie de puissance de stator du générateur à double alimentation (118),
simultanément à la détermination du premier signal de commande (310), la détermination, par l'intermédiaire d'un module de commande de tampon du dispositif de commande (202), d'un signal de commande de tampon (316) pour un tampon d'énergie CC (318) sur la base, au moins en partie, du composant non distribuable (302), le tampon d'énergie CC (318) étant couplé de manière fonctionnelle entre un convertisseur côté ligne (414) et un convertisseur côté rotor (412) d'un convertisseur de puissance,
l'exposition de la distribution du composant non distribuable (302) à un réseau électrique en fournissant le composant non distribuable (302) au tampon d'énergie CC (318) par l'intermédiaire du convertisseur côté ligne (414) en réponse au premier signal de commande (310) et au signal de commande de tampon (316), et
la distribution du composant distribuable (306) de la puissance de sortie totale (304) du générateur (118) au réseau électrique.

14. Système (300) selon la revendication 13, dans lequel le composant non distribuable (302) comprend une partie de la puissance de sortie totale (304) du générateur (118) qui dépasse une limite de distribution de puissance active.

15. Système (300) selon la revendication 14, dans lequel la pluralité d'opérations comprend :
la réception, par l'intermédiaire du module de compensation, d'un retour d'amplitude de tension de stator et un ordre d'amplitude de tension synthétisée ;
la détermination, par l'intermédiaire du module de compensation, d'un quotient d'un produit du composant non distribuable (302) et d'une réactance divisé par un produit du retour d'amplitude de tension de stator et de l'ordre d'amplitude de tension synthétisée ; et
la détermination, par l'intermédiaire du module de compensation, du premier signal de commande (310) comme un arc sinus du quotient.
